# EUROPEAN PATENT SPECIFICATION

(11) **EP 3 213 664 B1**
(45) Date of publication and mention of the grant of the patent: **01.08.2018**
(21) Application number: 15855428.7
(22) Date of filing: 16.10.2015
(51) Int. Cl.: A47J 45/07

(54) **COOKING VESSEL HAVING DETACHABLE HANDLE**
KOCHGEFÄSS MIT ABNEHMBAREM HANDGRIFF
RÉCIPIENT DE CUISSON À POIGNÉE AMOVIBLE

(30) Priority: 27.10.2014 KR 20140146518
(43) Date of publication of application: 06.09.2017
(73) Proprietor: Poketdream Inc., Seoul 07968 (KR)
(72) Inventor: OH, Kuen Sik, Seoul 07979 (KR)
(74) Representative: Zardi, Marco
(86) International application number: PCT/KR2015/010939
(87) International publication number: WO 2016/068529

(56) References cited:
- JP-A- 2002 199 993
- KR-A- 20050 039 480
- KR-A- 20110 019 593
- KR-A- 20110 096 999
- KR-B1- 101 217 604
- KR-Y1- 200 278 728
- US-A- 324 671
- US-A- 585 284
- US-A- 3 334 782

## Description

### TECHNICAL FIELD

The present invention relates to a cooking vessel having a detachable handle, and more specifically, to a cook set including a handle easily attachable to and detachable from the cook set, wherein once the handle is coupled to the cook set, the handle is firmly fixed to the cook set even when the cook set is moved or flipped during cooking.

### BACKGROUND ART

In general, cooking vessels may be used as outdoor cooking utensils, and have been widely used for cooking foods in indoor places such as homes or in outdoor places such as mountains or camping grounds.

Such a cooking vessel used for cooking food may include a vessel body and a handle coupled to the vessel body. When the cooking vessel is used, the cooking vessel may be placed on a burner or a gas stove after putting food into the cooking vessel and closing the cooking vessel with a lid.

For example, a cooking vessel may include a cylindrical vessel body, a handle provided on an outer surface of the body for a user to grip the handle during cooking, and a lid provided on an upper portion of the cooking vessel.

Various types of cooking vessels including detachable handles have been proposed to reduce volumes occupying the storage space or warehouse.

Detachable handles may be classified into a type disclosed in Korean Patent Application Publication No. 10-2004-0043798, in which a detachable handle fixed to a cooking vessel body by biting an upper edge of the cooking vessel body like tongs, and a type disclosed in Korean Patent No. 10-1217604, in which a detachable handle fixed to a cooking vessel body as a coupling part of the handle is coupled to another coupling part formed on a side of the cooking vessel body.

To reduce the total volume of a cooking vessel set for carrying or storing, cooking vessels may be nested inside one another by placing a relatively small cooking vessel inside a relatively large cooking vessel until all the other cooking vessels of the set are inserted inside the largest cooking vessel. Since the largest cooking vessel accommodates all the other cooking vessels, a user may easily carry all cooking vessels of a cooking vessel set as if the user carries only one big cooking vessel.

Therefore, cooking vessels have been manufactured to have fewer and closely contacting protrusions in order to minimize the total volume of cooking vessels and improve spatial efficiency when storing the cooking vessels by placing a relatively small cooking vessel inside a relatively large cooking vessel.

However, a handle of the type disclosed in Korean Patent Application Publication No. 10-2004-0043798 has a complicated structure because the handle fixed to a cooking vessel body by biting an upper edge of the cooking vessel body like tongs, and is also hygienically unacceptable because a portion of the handle located inside the cooking vessel body may be in contact with food being cooked.

In addition, a handle of the type disclosed in Korean Patent No. 10-1217604 may be detached from a cooking vessel body when the cooking vessel is flipped, and the cooking vessel has a large volume because of a large coupling part formed on the cooking vessel body. Furthermore, the handle of this type is not easily attached to and detached from the cooking vessel body. JP 2002 199993 A discloses a detachable handle structure composed of a handle mounting part projectingly attached to a vessel body such as a pot and frying pan, and a handle body which has fitting sections fittable by moving from the downside to the upside on right and left side sections in the handle mounting part and can be connected so as to be capable of lifting the vessel body, and the handle body is provided with a movement control means which controls movement downward with respect to the handle mounting section when the fitting sections in the handle body are fitted to the right and left side sections in the handle mounting part.

### DISCLOSURE OF THE INVENTION

### TECHNICAL PROBLEM

An object of the present invention is to provide a cooking vessel including a handle easily detachable from the cooking vessel to reduce the overall volume of the cooking vessel and easily carry the cooking vessel, wherein once the handle is attached to the cooking vessel, the handle is firmly fixed to the cooking vessel even when the cooking vessel is moved or flipped during cooking.

### TECHNICAL SOLUTION

A detachable-handle type cooking vessel of the present invention includes a cooking vessel body and a cooking vessel handle according to claim 1.

The cooking vessel body includes a V-shaped insertion coupling part protruding from a side portion of the cooking vessel body, a circular fixing plate extending from the V-shaped insertion coupling part, and a recess concavely formed in a center portion of the circular fixing plate,

The cooking vessel handle is a reverse L-shaped plate including a grip part for a user to grip, a V-shaped hole defined in a bent portion extending from the grip part, and an open hole defined in a front portion of the grip part to expose a finger-press protrusion part,

A plate spring having a reverse L-shape is provided on a lower portion of the cooking vessel handle, the plate spring including a plate spring attachment part fixedly attached to a rear portion of the open hole of the cooking vessel handle, a plate spring contact part extending from the plate spring attachment part for making tight contact with the circular fixing plate, a plate spring protrusion stopper protruding from a front portion of
the plate spring contact part and inserted into the recess to fix the cooking vessel handle, and the finger-press protrusion part extending from the plate spring attachment part and located inside the open hole.

### ADVANTAGEOUS EFFECTS

According to the present invention, a cooking vessel body and a cooking vessel handle of a cooking vessel are separable such that the cooking vessel may be easily carried. The handle is easily detached from the cooking vessel body by pressing a finger-press protrusion part to release a plate spring protrusion stopper from a recess, and then pushing a grip part downward to separate the handle from the cooking vessel body. The cooking vessel and the handle may be fixed to each other without being shaken left and right owing to a V-shaped insertion coupling part and a V-shaped hole. Even when the cooking vessel is lifted upward using the handle, the handle is not detached and is maintained in a fixed state by a lower end portion of the V-shaped hole. A plate spring protrusion stopper prevents the handle from being unintentionally detached from the cooking vessel when the cooking vessel is put down and prevents the handle from being detached from the cooking vessel body even when a user flips the cooking vessel while holding the handle.

### BRIEF DESCRIPTION OF THE DRAWINGS

FIG. 1 is a perspective view illustrating an embodiment of the present invention.
FIG. 2 is a phantom view illustrating an embodiment of the present invention.
FIG. 3 is a view illustrating a usage state according to an embodiment of the present invention.
FIG. 4 is a cross-sectional view illustrating an embodiment of the present invention.
FIG. 5 is a cut-way view illustrating an embodiment of the present invention.
FIG. 6 is a partial phantom view illustrating an embodiment of the present invention.
FIG. 7 is a partial phantom view illustrating an embodiment of the present invention.

### MODE FOR CARRYING OUT THE INVENTION

Preferred embodiments of the present invention will now be described in detail with reference to the accompanying drawings. However, various changes in form and details may be made within the scope of the present invention, and the scope of the present invention is not limited to the embodiments described below. The embodiments are provided so that this disclosure will be thorough and complete, and will fully convey the scope of the invention to those of ordinary skill in the art. In the drawings, the shapes and dimensions of elements may be exaggerated for clarity, and like reference numerals denote like elements.

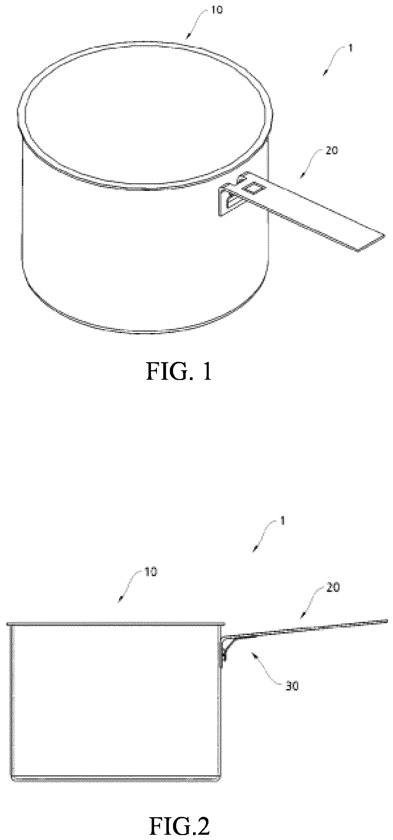

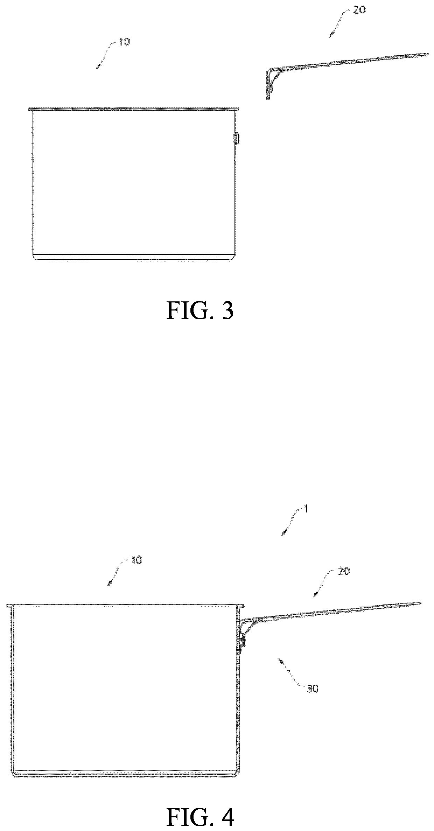

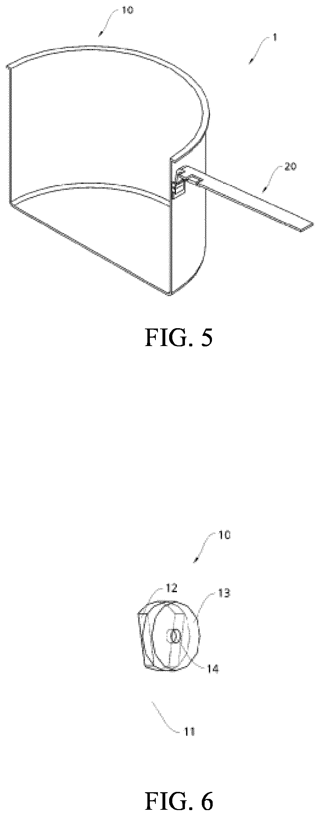

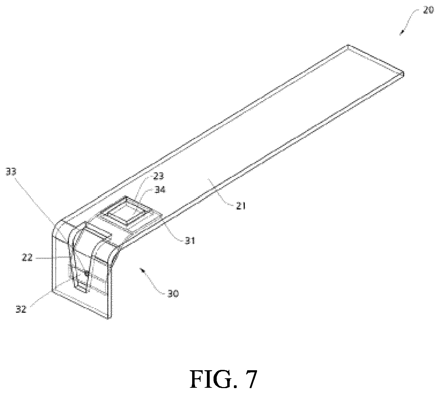

FIG. 1 is a perspective view illustrating an embodiment of the present invention. FIG. 2 is a phantom view illustrating an embodiment of the present invention. FIG. 3 is a side view illustrating a usage state in which a cooking vessel handle 20 is separated from a cooking vessel body 10 according to an embodiment of the present invention. FIG. 4 is a cross-sectional view illustrating an embodiment of the present invention. FIG. 5 is a cut-way view illustrating an embodiment of the present invention. FIG. 6 is an enlarged phantom view of a portion of the cooking vessel body 10 according to an embodiment of the present invention. FIG. 7 is a partial phantom view illustrating an embodiment of the present invention.

Referring to FIGS. 1 to 7, a detachable-handle-type cooking vessel of the present invention includes the cooking vessel body 10, the cooking vessel handle 20, and a plate spring 30.

The cooking vessel body 10 includes a container part 11, a V-shaped insertion coupling part 12 protruding from a side portion of the container part 11, a circular fixing plate 13 extending from the V-shaped insertion coupling part 12, and a recess 14 concavely formed in a center portion of the circular fixing plate 13. In an embodiment of the present invention, the cooking vessel has a general pot shape. However, the cooking vessel may have any other cooking utensil shape such as a frying pan shape.

The cooking vessel handle 20 is a reverse L-shaped plate including a grip part 21 for a user to grip, a V-shaped hole 22 defined in a bent portion extending from the grip part 21, and an open hole 23 defined in a front portion of the grip part 21 to expose a finger-press protrusion part 34. In an embodiment of the present invention, the grip part 21 has a long bar shape. However, the grip part 21 of the cooking vessel handle 20 may have a wide shape or an elliptical shape.

The plate spring 30 having a reverse L-shape is provided on a lower portion of the cooking vessel handle 20. The plate spring 30 includes a plate spring attachment part 31 fixedly attached to a rear portion of the open hole 23 of the cooking vessel handle 20, a plate spring contact part 32 extending from the plate spring attachment part 31 for making tight contact with the circular fixing plate 13, a plate spring protrusion stopper 33 protruding from a front portion of the plate spring contact part 32, and the finger-press protrusion part 34 extending from the plate spring attachment part 31 and located inside the open hole 23. In an embodiment of the present invention, the plate spring attachment part 31 is welded to the cooking vessel handle 20. However, the plate spring attachment part 31 may be fixed to the cooking vessel handle 20 by another method such as riveting or screwing.

According to a preferred embodiment of the present invention, the open hole 23 is smaller than the width of a finger of a user such that the finger-press protrusion part 34 may be pushed down only about 1 mm to about 3 mm. Owing to this structure, the plate spring 30 may not be excessively pushed down to the extent that the plate spring 30 losses its elasticity or the plate spring attachment part 31 separates from the cooking vessel handle 20.

In addition, a portion of the plate spring 30 extending between the plate spring attachment part 31 and the plate spring contact part 32 may have a curved shape such that when the cooking vessel handle 20 is attached, the circular fixing plate 13 may not physically interfere with said portion of the plate spring 30.

The cooking vessel may be used as follows according to an embodiment of the present invention.

According to an embodiment of the present invention, as shown in FIG. 3, the cooking vessel handle 20 and the cooking vessel body 10 are usually stored or carried separately.

When in use for cooking, the cooking vessel handle 20 is horizontally pushed inward while holding the grip part 21 of the cooking vessel handle 20 so as to insert the circular fixing plate 13 and the V-shaped insertion coupling part 12 into a widely opened upper side of the V-shaped hole 22, and then the cooking vessel handle 20 is vertically pushed upward so as to further insert the V-shaped insertion coupling part 12 along the V-shaped hole 22.

At this time, the cooking vessel handle 20 is pushed upward until the plate spring protrusion stopper 33 is inserted into the recess 14, and at the moment when the plate spring protrusion stopper 33 is inserted into the recess 14 with a clicking sound, the cooking vessel handle 20 is fixed to the cooking vessel body 10.

In the above-described fixed state, a user may cook food in the cooking vessel 1 while shaking the cooking vessel 1 using the grip part 21 of the cooking vessel handle 20, and may flip the cooking vessel 1 using the grip part 21 so as to take the food out of the cooking vessel 1.

When the cooking vessel 1 is stored after cooking, the cooking vessel handle 20 may be separated from the cooking vessel body 10 by pushing the cooking vessel handle 20 down in a vertical direction while pressing the finger-press protrusion part 34.

The scope of present invention is not limited to the above-described embodiments and the accompanying drawings but is defined by the appended claims. Those of ordinary skill in the art may make various replacements, modifications, or changes without departing from the scope of the present invention defined by the appended claims, and these replacements, modifications, or changes should be construed as being included in the scope of the present invention.

## Claims

1. A cooking vessel for cooking food, the cooking vessel comprising a cooking vessel body (10) and a cooking vessel handle (20),
wherein the cooking vessel body (10) comprises a V-shaped insertion coupling part (12) protruding from a side portion of the cooking vessel body (10),
wherein the cooking vessel handle (20) is a reverse L-shaped plate comprising a grip part (21) for a user to grip, a V-shaped hole (22) defined in a bent portion extending from the grip part (21), and an open hole defined in a front portion of the grip part (21) to expose a finger-press protrusion part (34), **characterized in that** the cooking vessel body (10) further comprises a circular fixing plate (13) extending from the V-shaped insertion coupling part (12), and a recess (14) concavely formed in a center portion of the circular fixing plate (13), and
a plate spring (30) having a reverse L-shape is provided on a lower portion of the cooking vessel handle (20), the plate spring (30) comprising a plate spring attachment part (31) fixedly attached to a rear side of the open hole of the cooking vessel handle (20), a plate spring contact part (32) extending from the plate spring attachment part (31) for making tight contact with the circular fixing plate (13), a plate spring protrusion stopper (33) protruding from a front side of the plate spring contact part (32) and inserted into the recess (14) to fix the cooking vessel handle (20), and the finger-press protrusion part (34) extending from the plate spring attachment part (31) and located inside the open hole.

2. The cooking vessel of claim 1, wherein a portion of the plate spring (30) extending between the plate spring attachment part (31) and the plate spring contact part (32) has a curved shape.

3. The cooking vessel of claim 1, wherein the plate spring attachment part (31) of the plate spring (30) is fixedly attached to the rear side of the open hole of the cooking vessel handle (20) by welding.

## Patentansprüche

1. Kochgefäß zum Kochen von Nahrung, wobei das Kochgefäß einen Kochgefäßkörper (10) und eine Kochgefäßhandhabungseinrichtung (20) umfasst,
wobei der Kochgefäßkörper (10) ein V-förmiges Einfügekopplungsteil (12) umfasst, das von einem Seitenabschnitt des Kochgefäßkörpers (10) vorsteht,
wobei die Kochgefäßhandhabungseinrichtung (20) eine umgekehrt L-förmige Platte ist, die ein Griffteil (21) zum Greifen durch einen Benutzer, ein V-förmiges Loch (22), das in einem sich von dem Griffteil (21) erstreckenden gebogenen Abschnitt definiert ist, und ein offenes Loch umfasst, das in einem Vorderabschnitt des Griffteils (21) definiert ist, um ein Fingerdruckvorsprungsteil (34) freizulegen,
**dadurch gekennzeichnet, dass** der Kochgefäßkörper (10) ferner eine sich von dem V-förmigen Einfügekopplungsteil (12) erstreckende kreisförmige Fixierungsplatte (13) und eine in einem Mittelabschnitt der kreisförmige Fixierungsplatte (13) konkav gebildete Aussparung (14) umfasst, und
eine Plattenfeder (30), die eine umgekehrte L-Form aufweist, an einem unteren Abschnitt der Kochgefäßhandhabungseinrichtung (20) vorgesehen ist, wobei die Plattenfeder (30) ein an einer Hinterseite des offenen Lochs der Kochgefäßhandhabungseinrichtung (20) fest angebrachtes Plattenfederanbringungsteil (31), ein sich von dem Plattenfederanbringungsteil (31) erstreckendes Plattenfederkontaktteil (32) zum Herstellen eines engen Kontakts mit der kreisförmigen Fixierungsplatte (13), einen von einer Vorderseite des Plattenfederkontaktteils (32) vorstehenden und in die Aussparung (14) eingefügten Plattenfedervorsprungsanschlag (33) zum Fixieren der Kochgefäßhandhabungseinrichtung (20) und das sich von dem Plattenfederanbringungsteil (31) erstreckende und innerhalb des offenen Loches angeordnete Fingerdruckvorsprungsteil (34) umfasst.

2. Kochgefäß nach Anspruch 1, wobei ein sich zwischen dem Plattenfederanbringungsteil (31) und dem Plattenfederkontaktteil (32) erstreckender Abschnitt der Plattenfeder (30) eine gekrümmte Form aufweist.

3. Kochgefäß nach Anspruch 1, wobei das Plattenfederanbringungsteil (31) der Plattenfeder (30) durch Schweißen fest an der Hinterseite des offenen Lochs der Kochgefäßhandhabungseinrichtung (20) angebracht ist.

## Revendications

1. Un récipient de cuisson pour cuire des aliments, le récipient de cuisson comprenant un corps (10) et une poignée (20) du récipient de cuisson,
- dans lequel le corps (10) du récipient de cuisson comprend une partie de couplage (12) d'insertion en forme de V en saillie par rapport à une portion latérale du corps (10) de récipient de cuisson,
- dans lequel la poignée (20) du récipient de cuisson est une plaque en forme de L inversé comprenant une partie d'accrochage (21) à accrocher pour un utilisateur, une cavité (22) en forme de V pratiquée dans une partie frontale courbée s'étendant à partir de la partie d'accrochage (21), et une cavité ouverte pratiquée dans une partie frontale de la partie d'accrochage (21) pour mettre à nu une partie en saillie (34) de pression d'un doigt,
**caractérisé en ce que**
le corps (10) du récipient de cuisson comprend de plus une plaque circulaire de fixation (13) s'étendant de la partie d'accrochage (21) en forme de V, et une cavité (14) réalisée de manière concave délimitée dans la partie centrale de la plaque circulaire de fixation (13), et
un ressort à lame (30) présentant une forme en L inversé est appliqué sur une portion inférieure de la poignée (20) du récipient de cuisson, le ressort à lame (30) comprenant une partie de fixation (31) du ressort à lame fixée rigidement à une partie latérale de la cavité ouverte de la poignée (20) du récipient de cuisson, une partie de contact (32) du ressort à lame s'étendant à partir de la partie d'attache (31) du ressort à lame pour réaliser un contact étroit avec la plaque circulaire de fixation (13), une butée (33) en saillie du ressort à lame s'étendant à partir d'une partie frontale de la partie de contact (32) du ressort à lame et insérée dans la cavité (14) pour fixer la poignée du récipient de cuisson, et la partie en saillie (34) de pression d'un doigt s'étendant à partir de la partie de fixation (31) du ressort à lame et positionné à l'intérieur de la cavité ouverte.

2. Récipient de cuisson selon la revendication 1, dans lequel une partie du ressort à lame (30) s'étendant entre la partie d'attache (31) du ressort à lame et la partie de contact (32) présente une forme incurvée.

3. Récipient de cuisson selon la revendication 1, dans lequel la partie de fixation (31) du ressort à lame (30) est fixée rigidement à la partie arrière de la cavité ouverte de la poignée (20) du récipient de cuisson par soudure.
